# EUROPEAN PATENT SPECIFICATION

(11) **EP 2 811 722 B1**
(45) Date of publication and mention of the grant of the patent: **05.10.2016**
(21) Application number: 14169242.6
(22) Date of filing: 21.05.2014
(51) Int. Cl.: H04M 1/05, H04R 1/14, H04M 1/60

(54) **Throat vibration audio wireless transmission apparatus**
Vorrichtung zur drahtlosen Übertragung von Halsvibrationsaudio
Appareil de transmission sans fil audio de vibration de gorge

(30) Priority: 05.06.2013 TW 102210539
(43) Date of publication of application: 10.12.2014
(73) Proprietor: Chen, Yi Chuan, New Taipei City 242 (TW)
(72) Inventor: Chen, Yi Chuan, New Taipei City 242 (TW)
(74) Representative: 2K Patentanwälte Blasberg Kewitz & Reichel

(56) References cited:
- DE-A1- 10 064 926
- US-A1- 2003 163 287
- US-A1- 2006 206 979
- US-A1- 2008 166 005
- US-A1- 2009 215 502
- "User Manual Midland BT Sport", , 21 March 2007 (2007-03-21), pages 7-12, XP055143113, Retrieved from the Internet: URL:www.midlandeurope.com/download.aspx?fi le=instz_bt sport.pdf [retrieved on 2014-09-29]
- "Amazon.co.uk: Midland BT Sport Throat Microphone Bluetooth", , 12 July 2011 (2011-07-12), XP055143127, Retrieved from the Internet: URL:www.amazon.co.uk/Midland-C850-Throat-M icrophone-Bluetooth/dp/B000W3PFTG [retrieved on 2014-09-29]

## Description

### FIELD OF THE INVENTION

The present invention relates to a throat vibration microphone and particularly to a throat vibration audio wireless transmission apparatus.

### BACKGROUND OF THE INVENTION

With increasing popularity of consumer electronic products such as smartphones, Personal Digital Assistant (PDA) and the like, incorporated with usage in various occasions such as work and exercises, many different types of microphone devices have been developed and marketed. For instance, to facilitate listening during vehicle driving or riding ear-hook microphones have been invented. The ear-hook microphones mostly receives sound by the capacitance sound receiving manner which treat air as medium to receive sound generated from a sound source. However, due to the noises of environment also can be received by the microphone through the air, the quality of sound received is not desirable, and noises are easily generated to impair the sound clarity.

To resolve the aforesaid problem, Taiwan Patent No. 458479 discloses a throat cavity sound-controlled piezoelectric microphone for mobile phones. It comprises a piezoelectric microphone, a metal elastic neck bracket and an earphone. The piezoelectric microphone is installed on one end of the metal elastic neck bracket and connected with the earphone through a transmission line. The piezoelectric microphone and earphone can be stretched outwards through a connection line to a desired length. The metal elastic neck bracket can be nipped on a user's neck to make the piezoelectric microphone be attached to the Adam's apple of the speaker to detect skin vibration caused by throat cavity resonance when the speaker is talking, and convert to electric signals through a piezoelectric fashion to block the ambient noises.

However, the aforesaid throat cavity sound-controlled piezoelectric microphone for mobile phones adopts a design with line connection. During carrying or use it is constrained by the length of the connection line and must be used at a short distance. Moreover, the connection line is easily entangled so that an extra line winding means is needed for retraction and storage the connection line to reduce the length thereof while in use, and also requires a greater care during stretching to avoid entangling. All this creates a lot of troubles for users.

DE 100 649 26 A1 discloses a telecommunications device which is constructed of square, hollow modules of equal sizes fixed together by clamping cords pulled through elongated holes in the modules. The modules at the ends are rounded to enable adaptation to different neck sizes by means of the clamping cords and fixing bolts.

US 2009/215502 A1 discloses a portable headset voice recorder that enables wireless two way voice communications between the headset and a mobile phone has an ear grip that grips an ear of a user. A housing mounted on the ear grip has a microphone, a speaker, a display and a user input. A digital memory enclosed with the housing records audio samples from the microphone in response to a user manipulating the user input. A global positioning system determines location information corresponding to the recorded audio samples. A clock generates a time stamp associated with the audio sample. The headset has a USB port that is used to recharge the headset and transfer the recorded files and associated metadata to a computer. Application software residing on the computer allows a user to review and manipulate the files and program the headset to trigger playbacks and records.

US 2006/206979 A1 discloses a pre-tied necktie or bow tie that appears to be manually tied and fully encircling the neck but that is in reality comprised of a unique clamping device that clamps around the front of the neck beneath the collar enabling it to be quickly and easily put on or removed from the neck without pulling it over the head and without connecting or unconnecting the ends.

Further prior art documents to be mentioned here, are the following: US 4, 607,383; US 2001/0012373 A1; US 2009/0030346 A1 and US 2011/0051944 A1.

In short, the conventional techniques still have a lot of drawbacks in terms of design and use. Adopted wireless transmission in the design of throat vibration microphone is a commendable approach to improve the usability and convenience and the focus of this invention.

### SUMMARY OF THE INVENTION

The object of the present invention is to provide an apparatus which is adjustable according to a user's neck and attached directly thereon to receive sound to solve the problem of environmental interference.

To achieve the foregoing object the invention provides a throat vibration audio wireless transmission apparatus which comprises a body, a throat vibration detection module and a wireless transmission module installed in the body. The body includes a cap, a flexible base coupled with the cap and a deformation holding member on the flexible base. The cap has a plurality of cover portions and at least one elastic bending portion bridging two neighboring cover portions of the body. The deformation holding member includes a release state without bending by forces and a bending state in which the deformation holding member is pushed by forces to make two ends thereof move towards the center to form an arched shape. At the bending state the elastic bending portion drives the flexible base and the cap to bend to allow the elastic bending portion to extend towards the cover portions at two sides thereof, and the flexible base warps in a bend direction to drive the elastic bending portion to bend or warp. The elastic bending portion is extracted from the two neighboring cover portions at two sides thereof.

The body is held at the bending state by the deformation holding member. On the other hand, the flexible base can also be bent opposite to the bend direction to retract the elastic bending portion and make the body in a horizontal placement position. The throat vibration detection module includes a throat vibration detector located at one end of the body and a control circuit board installed in the body and electrically connected to the throat vibration detector. The throat vibration detector can detect a vibration wave and convert to an electric signal. The control circuit board receives the electric signal and converts to an audio signal. The wireless transmission module is installed in the body and electrically connected to the control circuit board to transmit the sound signal.

In one embodiment the invention further includes a battery installed in the body to provide electric power to the control circuit board.

In another embodiment the body includes a Universal Serial Bus (USB) connector at another end opposite to the throat vibration detector to form electric connection with the control circuit board so that the throat vibration audio wireless transmission apparatus can be connected with an external electronic device.

In yet another embodiment the body includes an audio output port electrically connected to the control circuit board and outputting the audio signal.

In yet another embodiment the body holds at least one earphone electrically connected to the control circuit board for providing sound.

In yet another embodiment the body contains at least one light emitting diode (LED) electrically connected to the control circuit board to provide light for purposes of alert and illumination.

In yet another embodiment the control circuit board includes a memory unit to store the audio signal.

In yet another embodiment the control circuit board is a flexible printed circuit board.

In short, the throat vibration audio wireless transmission apparatus of the invention mainly includes a body, a throat vibration detection module located at one end of the body and a wireless transmission module installed in the body. The body includes a cap, a flexible base coupled with the cap and a deformation holding member on the flexible base. The cap has a plurality of cover portions and at least one elastic bending portion bridging two neighboring cover portions. The deformation holding member can be pushed by forces to make two ends thereof move towards the center to form an arched shape and drive the flexible base and the cap to bend to allow the elastic bending portion to be extracted from the two cover portions at two sides thereof. The throat vibration detector of the throat vibration detection module detects a vibration wave and converts to an electric signal which is received by the control circuit board of the throat vibration detection module and converted to an audio signal transmitted by the wireless transmission module. The apparatus thus formed can be adjusted according to a user's neck and attached thereon closely to receive the sound so that the interference of environment can be reduced. The apparatus also can be moved and adjusted according to user's requirements or desired locations in a wireless fashion, which further improves the usability.

The foregoing, as well as additional objects, features and advantages of the invention will be more readily apparent from the following detailed description, which proceeds with reference to the accompanying drawings.

### BRIEF DESCRIPTION OF THE DRAWINGS

- FIG. 1: is a perspective view of a first embodiment of the throat vibration audio wireless transmission apparatus of the invention.
- FIG. 2: is an exploded view of the first embodiment of the invention.
- FIG. 3: is a schematic view of the first embodiment of the invention in a use condition.
- FIG. 4: is a perspective view of a second embodiment of the throat vibration audio wireless transmission apparatus of the invention.
- FIG. 5: is a perspective view of a third embodiment of the throat vibration audio wireless transmission apparatus of the invention.

### DETAILED DESCRIPTION OF THE PREFERRED EMBODIMENTS

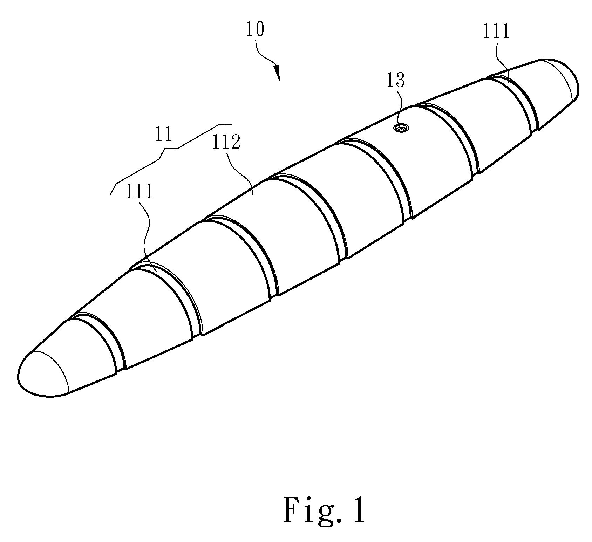

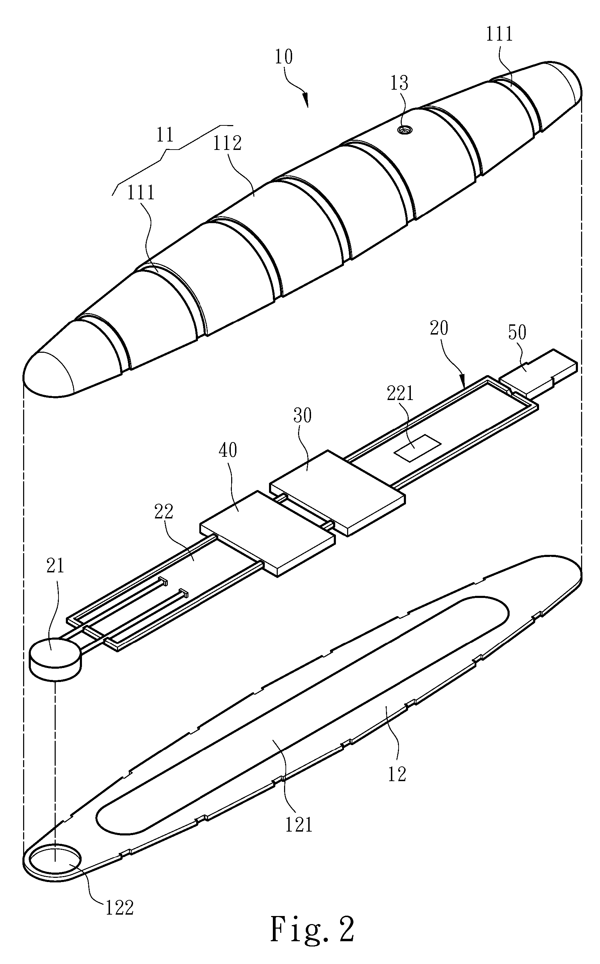

Please refer to FIGS. 1, 2 and 3 for a first embodiment of the throat vibration audio wireless transmission apparatus of the invention. It comprises a body 10, a throat vibration detection module 20, a wireless transmission module 30 (such as Bluetooth) and a battery 40. The body 10 includes a cap 11 and a flexible base 12 coupled with the cap 11. The cap 11 includes a plurality of cover portions 112 and at least one elastic bending portion 111 bridging two neighboring cover portions 112. The elastic bending portion 111 is a flexible material (such as rubber). A deformation holding member 121 is on the flexible base 12 and has a perforation 122 formed thereon. The deformation holding member 121 is a flexible material (such as silicon rubber) and has a release state without receiving forces to bend and a bending state in which the deformation holding member 121 is pushed by forces to make two ends thereof move towards the center to form an arched shape. At the bending state, the deformation holding member 121 drives the flexible base 12 and the cap 11 to bend to allow the elastic bending portion 111 to extend towards the cover portions 112 at two sides thereof.

The throat vibration detection module 20 is installed in the body 10 and includes a throat vibration detector 21 and a control circuit board 22. The throat vibration detector 21 is located at one end of the body 10 and exposed through the perforation 122 to attach closely to the Adam's apple of a user. The control circuit board 22 is installed in the body 10 and electrically connected to the throat vibration detector 21 which detects a vibration wave and transform to an electric signal. The control circuit board 22 receives the electric signal and converts to an audio signal. The control circuit board 22 is a bendable flexible printed circuit board and includes a memory unit 221 to store any type of audio information (such as music, sound signals). The wireless transmission module 30 is installed in the body 10 and electrically connected to the control circuit board 22 to transmit the audio signal converted by the control circuit board 22. In addition, the body 10 also includes an audio output port 13 electrically connected to the control circuit board 22 and outputting the audio signal to an earphone connected externally (not shown in the drawings). The body 10 includes a USB 50 located at another end opposite to the throat vibration induction device 21. The USB 50 is electrically connected to the control circuit board 22 to allow the throat vibration audio wireless transmission apparatus to form electric connection with an external electronic device (not shown in the drawings) to save information or charge.

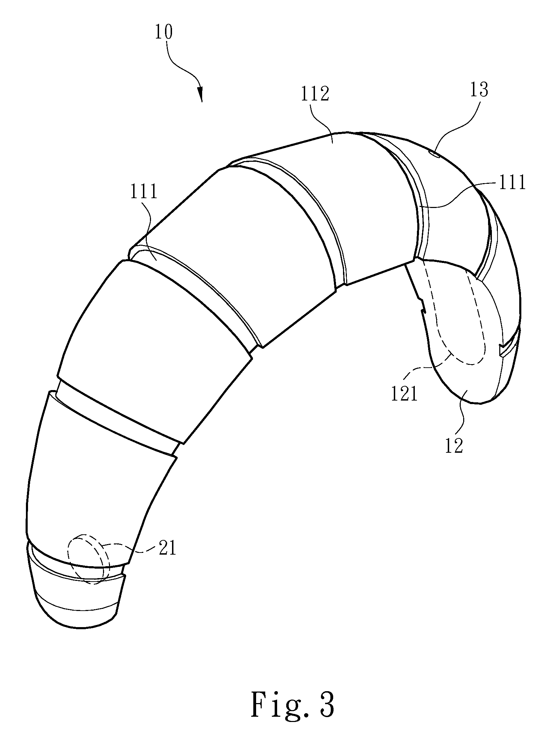

In this embodiment the cap 11 and base 12 are coupled by buckling. User can replace the cap 11 according to requirement. The elastic bending portion 111 of the cap 11 and deformation holding member 121 of the flexible base 12 are made by flexible material. As pervious discussed, the deformation holding member 121 has a release state and a bending state. At the release state the deformation holding member 121 does not receive forces to bend. At the bending state the deformation holding member 121 is pushed by forces to make two ends thereof move towards the center to form an arched shape, and drives the flexible base 12 and the cap 11 to bend to allow the elastic bending portion 111 to extend towards the cover portions 112 at two sides thereof (referring to FIG. 3), so that the body 10 is adjustable by the user according to the user's neck and closely attached thereon. The throat vibration detector 21 directly attached to the Adam's apple of the user detects vibration waves from the Adam's apple and converts to the electric signal which in turn is received by the control circuit board 22 and converted to the audio signal, then transmitted via the wireless transmission module 30 to a portable electronic device (such as a handset, not shown in the drawings). I.e., receiving sound through direct attaching the interference of environment can be reduced. Moreover, the wireless transmission approach also can resolve the limitation of the distance between the body 10 and the portable electronic device caused since the line transmission that occurs to the conventional techniques. User can move and adjust according to requirements or desired positions in the wireless transmission fashion which greatly improves the usability and convenience.

Moreover, the memory unit 221 of the control circuit board 22 can save audio information such as music and sound signals. The audio output port 13 at the body 10 can be connected to an external earphone (not shown in the drawings) according to user's desire, so that the throat vibration audio wireless transmission apparatus can serve as a multimedia player, such as a MP3 player. In addition, the USB 50 at the opposite end of the throat vibration detector 21 allows the throat vibration audio wireless transmission apparatus to be connected electrically to an external electronic device (such as a computer, not shown in the drawings) to transmit the audio information to the external electronic device or save other information in the memory unit 221, or provide other functions such as charging the battery 40.

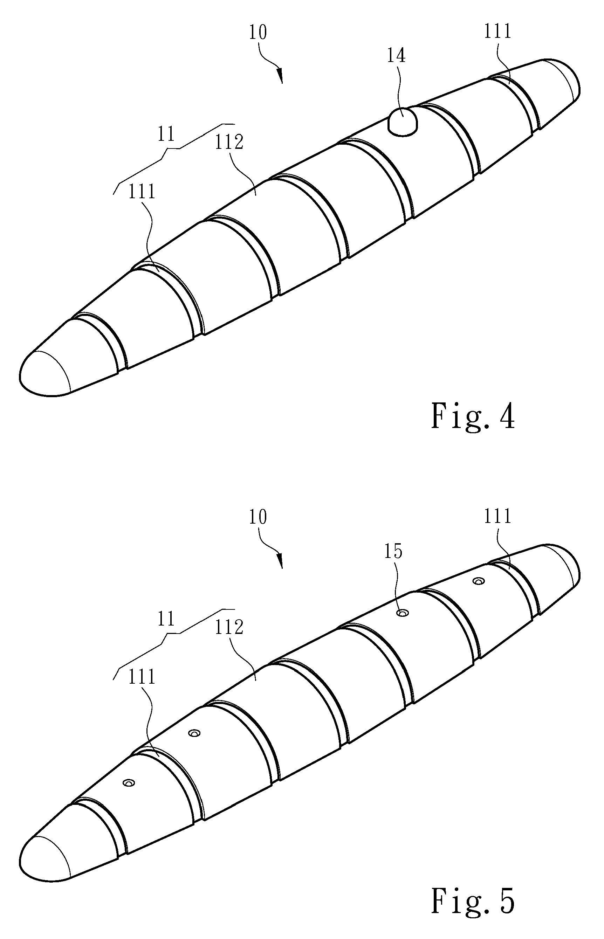

Please refer to FIG. 4 for a second embodiment of the invention. It is substantially constructed like the first embodiment previously discussed. The main difference is that the body 10 includes at least one earphone 14 directly installed thereon to form electrical connection with the control circuit board 22 to provide sound (such as music). The wire of the earphone 14 is held in the body 10 by a holding tool such as a line winder (not shown in the drawings). It is to be noted that the number and embodiment type of the earphone 14 is not limited to what has been mentioned above. The embodiment previously discussed serves merely for illustrative purpose and is not the limitation of the invention.

Please refer to FIG. 5 for a third embodiment of the invention. It is substantially constructed like the first embodiment previously discussed. The main difference is that the body 10 includes at least one LED 15 to provide light for alert and illumination. The LED 15 is electrically connected to the control circuit board 22 and controlled thereof to function as an alert light or illumination light, such as an indicator light for battery charging or night light, indictor light for signal transmission, etc. It is to be noted that the number and embodiment style of the LED 15 is not limited to the one previously discussed. The embodiment serves merely for illustrative purpose and is not the limitation of the invention.

As a conclusion, the throat vibration audio wireless transmission apparatus of the invention mainly includes a body, a throat vibration detection module located at one end of the body and a wireless transmission module installed in the body. The body includes a cap, a flexible base coupled with the cap and a deformation holding member on the flexible base. The cap includes a plurality of cover portions and at least one elastic bending portion bridging two neighboring cover portions. The deformation holding member can be pushed by forces to make two ends thereof move towards the center to form an arched shape and drive the flexible base and the cap to bend to allow the elastic bending portion to extend towards the cover portions at two sides thereof. The throat vibration detector detects a vibration wave and converts to an electric signal which is received by the control circuit board of the throat vibration detection module and converted to a audio signal, which in turn is transmitted by the wireless transmission module. The apparatus thus formed can be adjusted according to a user's neck and attached thereon closely to receive sound without interference of environment. It also can be moved according to user's requirements or desired locations in a wireless fashion, thus can greatly improve the usability and convenience.

In summary there is disclosed a throat vibration audio wireless transmission apparatus comprises a body 10, a throat vibration detection module 20 and a wireless transmission module 30. The body 10 includes a cap 11, a flexible base 12 and a deformation holding member 121. The cap 11 has multiple cover portions 112 and at least one elastic bending portion 111 bridging two neighboring cover portions 112. The deformation holding member 121 can be pushed by forces to form an arched shape and drive the flexible base 12 and the cap 11 to bend to allow the elastic bending portion 111 to extend towards the cover portions 112 at two sides thereof. The throat vibration detection module 20 includes a throat vibration detector 21 which detects a vibration wave and converts to an electric signal, and a control circuit board 22 which receives the electric signal and converts to an audio signal which is then transmitted by the wireless transmission module 30. The apparatus can be adjusted according to a user's neck and attached thereon closely to receive sound without being interfered by environment.

## Claims

1. A throat vibration audio wireless transmission apparatus, comprising:
a body (10);
a throat vibration detection module (20) including a throat vibration detector (21) located at one end of the body (10) and a control circuit board (22) installed in the body (10) and electrically connected to the throat vibration detector (21), the throat vibration detector (21) detecting a vibration wave and converting to an electric signal which is received by the control circuit board (22) and converted to an audio signal; and
a wireless transmission module (30) installed in the body (10) and electrically connected to the control circuit board (22) to transmit the audio signal converted by the control circuit board (22);
**characterized in that** the body (10) includes a single cap (11), a single flexible base (12) which is capped by the cap (11) and integrally formed, and a deformation holding member (121) on the flexible base (12); the cap (11) includes a plurality of cover portions (112) and at least one elastic bending portion (111) bridging two neighboring cover portions (112), the deformation holding member (121) includes a release state without receiving forces from a user to bend and a bending state in which the deformation holding member (121) is pushed by the forces to make two ends thereof move towards the center to form an arched shape and drive the flexible base (12) and the cap (11) to bend to allow the elastic bending portion (111) to be extracted from the two neighboring cover portions (112) at two sides thereof.

2. The throat vibration audio wireless transmission apparatus of claim 1 further including a battery (40) installed in the body (10) to provide power for the control circuit board (22).

3. The throat vibration audio wireless transmission apparatus of claim 1 or 2, wherein the body (10) includes a Universal Serial Bus connector (50) located at another end opposite to the throat vibration detector (21) and electrically connected to the control circuit board (22) to allow the throat vibration audio wireless transmission apparatus to connect with an external electronic device.

4. The throat vibration audio wireless transmission apparatus of one of the preceding claims, wherein the body (10) includes an audio output port (13) electrically connected to the control circuit board (22) outputting the audio signal.

5. The throat vibration audio wireless transmission apparatus of one of the preceding claims, wherein the body (10) holds at least one earphone (14) electrically connected to the control circuit board (22) for providing sound.

6. The throat vibration audio wireless transmission apparatus of one of the preceding claims, wherein the body (10) includes at least one light emitting diode (15) electrically connected to the control circuit board (22) to provide light for alert and illumination.

7. The throat vibration audio wireless transmission apparatus of one of the preceding claims, wherein the control circuit board (22) includes a memory unit (221) to save the audio signal.

8. The throat vibration audio wireless transmission apparatus of one of the preceding claims, wherein the control circuit board (22) is a flexible printed circuit board.

## Patentansprüche

1. Vorrichtung zur drahtlosen Übertragung von Halsvibrations-Lauten, umfassend:
ein Gehäuse (10);
ein Halsvibrations-Erkennungs-Modul (20), das einen Halsvibrations-Detektor (21) umfasst, der an einem Ende des Gehäuses (19) angeordnet ist, und eine Steuerungsplatine (22), die in dem Gehäuse (10) montiert ist und elektrisch mit dem Halsvibrations-Detektor (21) verbunden ist, wobei der Halsvibrations-Detektor (21) eine Schwingung bzw. Vibration erkennt und zu einem elektrischen Signal umwandelt, welches durch Steuerungsplatine (22) empfangen wird und in ein Audiosignal umgewandelt wird; und
ein drahtloses Übertragungs-Modul (30), das in dem Gehäuse (10) montiert ist und elektrisch mit der Steuerungsplatine (22) verbunden ist, um das Audiosignal, das durch die Steuerungsplatine (22) umgewandelt wurde, zu übertragen;
**dadurch gekennzeichnet, dass**
das Gehäuse (10) ein einzigen Deckel (11), eine flexible Befestigung (12), die durch den Deckel (11) gedeckelt wird und fest eingebaut ist, und einen Deformations-Halte-Element (121) auf der flexiblen Befestigung (12) umfasst; der Deckel (11) umfasst eine Vielzahl von Abdeckungs-Anteilen (112) und mindestens einen elastischen Biege-Anteil (111), welcher zwei benachbarte Abdeckungs-Anteile (112) überbrückt, wobei das Deformations-Halte-Element (121) einen Loslasse-Zustand umfasst, ohne dabei durch den Benutzer Kräfte zum Biegen zu erfahren, und einen Biege-Zustand in dem das Deformations-Halte-Element (121) durch Kräfte zusammengedrückt wird, so dass dessen zwei Enden sich in Richtung der Mitte bewegen, um eine bogenförmige Gestalt auszubilden und die flexible Befestigung (12) und den Deckel (11) zu biegen, um zu erlauben, dass der elastische Biege-Anteil (111) an den zwei benachbarten Abdeckungs-Anteilen (112) extrahiert wird.

2. Vorrichtung zur drahtlosen Übertragung von Halsvibrations-Lauten nach Anspruch 1, des Weiteren eine Batterie (40) umfassend, die in dem Gehäuse (10) montiert ist, um Strom für die Steuerungsplatine (22) bereitzustellen.

3. Vorrichtung zur drahtlosen Übertragung von Halsvibrations-Lauten nach Anspruch 1 oder 2, wobei das Gehäuse (10) des Weiteren eine universelle serielle Bus-Schnittstelle (USB-Schnittstelle) (50) umfasst, die an einem anderen Ende, gegenüberliegend zu dem Halsvibrations-Detektor (21) angeordnet ist und elektrisch mit der Steuerungsplatine (22) verbunden ist, um es der Vorrichtung zur drahtlosen Übertragung Von Halsvibrations-Lauten zu erlauben, sich mit einem externen elektrischen Gerät zu verbinden.

4. Vorrichtung zur drahtlosen Übertragung von Halsvibrations-Lauten nach einem der vorherigen Ansprüche, wobei das Gehäuse (10) eine Audio-Ausgabeschnittstelle (13) umfasst, die elektrisch verbunden mit der Steuerungsplatine (22) ist.

5. Vorrichtung zur drahtlosen Übertragung von Halsvibrations-Lauten nach einem der vorherigen Ansprüche, wobei das Gehäuse (10) mindestens eine Kopfhörer-Kapsel (14) umfasst, die elektrisch verbunden mit der Steuerungsplatine (22) ist, um einen Klang bereitzustellen.

6. Vorrichtung zur drahtlosen Übertragung von Halsvibrations-Lauten nach einem der vorherigen Ansprüche, wobei das Gehäuse (10) mindestens eine LED (15) umfasst, die elektrisch mit der Steuerungsplatine (22) verbunden ist, um Licht zum Warnen bzw. Alarmieren und Beleuchten bereitzustellen.

7. Vorrichtung zur drahtlosen Übertragung von Halsvibrations-Lauten nach einem der vorherigen Ansprüche, wobei die Steuerungsplatine (22) eine Speicher-Einheit (221) umfasst, um das Audio-Signal zu speichern.

8. Vorrichtung zur drahtlosen Übertragung von Halsvibrations-Lauten nach einem der vorherigen Ansprüche, wobei die Steuerungsplatine (22) eine flexible, gedruckte Platine ist.

## Revendications

1. Un appareil de transmission audio sans fil de vibration de la gorge, comprenant:
un corps (10) ;
un module de détection de vibration de gorge (20) comprenant un détecteur de vibration de gorge (21) situé à une extrémité du corps (10) et un carte de circuit de commande (22) installée dans le corps (10) et électriquement connectée au détecteur de vibrations de gorge (21), le détecteur de vibrations de la gorge (21) détectant une onde de vibration et la convertissant en un signal électrique qui est reçu par la carte de circuit de commande (22) et converti en un signal audio; et
un module de transmission sans fil (30) installé dans le corps (10) et connecté électriquement à la carte de circuit de commande (22) pour transmettre le signal audio converti par la carte de circuit de commande (22) ;
**caractérisé en ce que** le corps comporte un seul capuchon (11), une base souple (12) couplée au capuchon (11) et formé intégralement, un élément de maintien de déformation (121) sur la base souple (12); le capuchon (11) comprenant une pluralité de parties de recouvrement (112) et au moins une partie de flexion élastique (111) reliant deux parties voisines de recouvrement (112), l'élément de maintien de déformation (121) comprenant un état de relâchement sans force de flexion de la part d'un utilisateur et un état de flexion dans lequel l'élément de maintien de déformation (121) est poussé par les forces de façon à ce que deux extrémité se déplacent vers le centre pour former une forme archée et entraîner la base flexible (12) et le capuchon (11) en flexion pour permettre à la partie de flexion élastique (111) d'être extraite de deux parties de recouvrement voisines (112) à leurs deux côtés.

2. L'appareil de transmission audio sans fil de vibration de la gorge selon la revendication 1, comprenant en outre une batterie (40) installée dans le corps (10) pour l'alimentation électrique de la carte de circuit de commande (22).

3. L'appareil de transmission audio sans fil de vibration de la gorge selon la revendication 1 ou 2, dans lequel le corps (10) comprend un bus série universel USB (50) situé à une autre extrémité opposée au détecteur de vibrations de la gorge (21) et électriquement connecté à la carte de circuit de commande (22) pour permettre à l'appareil de transmission audio sans fil de vibration de la gorge de communiquer avec un dispositif électronique externe.

4. L'appareil de transmission audio sans fil de vibration de la gorge selon l'une des revendications précédentes, dans lequel le corps (10) comprend un port de sortie audio (13) connecté électriquement à la carte de circuit de commande (22) pour générer en sortie le signal audio.

5. L'appareil de transmission audio sans fil de vibration de la gorge selon l'une des revendications précédentes, dans lequel le corps (10) possède au moins un écouteur (14) connecté électriquement à la carte de circuit de commande (22) pour générer un signal sonore.

6. L'appareil de transmission audio sans fil de vibration de la gorge selon l'une des revendications précédentes, dans lequel le corps (10) comprend au moins une diode électroluminescente (15) reliée électriquement à la carte de circuit de commande (22) pour fournir une lumière d'alerte et d'éclairage.

7. L'appareil de transmission audio sans fil de vibration de la gorge selon l'une des revendications précédentes, dans lequel la carte de circuit de commande (22) comprend une unité de mémoire (221) pour enregistrer le signal audio.

8. L'appareil de transmission audio sans fil de vibration de la gorge de l'une des revendications précédentes, dans lequel la carte de circuit de commande (22) est une carte de circuit imprimé flexible.
